Europäisches Patentamt

European Patent Office

Office européen des brevets

(11) Veröffentlichungsnummer: **0 463 554 B1**

(12) **EUROPÄISCHE PATENTSCHRIFT**

(45) Veröffentlichungstag der Patentschrift: **12.10.94**

(21) Anmeldenummer: **91110040.2**

(22) Anmeldetag: **19.06.91**

Die Akte enthält technische Angaben, die nach dem Eingang der Anmeldung eingereicht wurden und die nicht in dieser Patentschrift enthalten sind.

(51) Int. Cl.⁵: **F16H 7/02**, F16H 55/17, F16G 1/28

(54) Zahnrad für Zahnriementrieb und Zahnriementrieb.

(30) Priorität: **22.06.90 DE 4019878**

(43) Veröffentlichungstag der Anmeldung:
**02.01.92 Patentblatt 92/01**

(45) Bekanntmachung des Hinweises auf die Patenterteilung:
**12.10.94 Patentblatt 94/41**

(84) Benannte Vertragsstaaten:
**DE ES FR GB IT SE**

(56) Entgegenhaltungen:
**EP-A- 0 327 873**
**WO-A-86/02982**
**DE-A- 3 245 708**

(73) Patentinhaber: **Continental Aktiengesellschaft**
**Vahrenwalder Strasse 9**
**D-30165 Hannover (DE)**

(72) Erfinder: **Berger, Ralf**
**Omptedastrasse 23**
**W-3000 Hannover 1 (DE)**

## Beschreibung

Die Erfindung bezieht sich auf ein Zahnrad einer beliebigen Zähnezahl n und Teilung T für einen Zahnriementrieb mit einer Vielzahl von Zähnen und jeweils zwischen zwei Zähnen befindlichen Zahnlücken, wobei die Flanken der Zähne zumindest in dem Radflankenbereich, der sich von 12 % bis 28 % der Teilung T vom Kopfkreis aus erstreckt, in der Weise konkav gewölbt sind, daß sich alle Krümmungspole radial außerhalb des Teilkreises befinden (DE-OS 32 45 708).

Bei der Bemaßung einer Verzahnungsgeometrie von Zahnrädern kann als Bezugslinie der Teilkreis herangezogen werden. Unter "Teilkreis" wird im Einklang mit DIN 9011 und 5296 nachfolgend der zur Radachse konzentrische Kreis verstanden, der den Durchmesser D = (n x T)/pi aufweist. Man ist bei der Zusammenstellung eines Riementriebes bemüht, daß bei der üblichen Belastung und Temperatur eines Einsatzfalles die Riementeilung mit der Radteilung übereinstimmt. Die Teilungslinie des Riemens, die Mittellinie des Zugstranges im Radialschnitt, ist dann im Bereich des Zahneingriffes mit dem (Rad-)Teilkreis deckungsgleich.

Entsprechend der Lage des Momentanpoles - beim Eintauchen des Riemenzahnes in die Radlükke - auf der (Riemen-)Teilungslinie liegen bei den meisten bekannten Radverzahnungen mit konkav gewölbten Zahnflanken die Krümmungsmittelpunkte der Zahnflanken radial innerhalb des Teilkreises, in DE-PS 36 29 789 auf dem Teilkreis und in DE-OS 32 45 708 um ein von der Zähnezahl abhängiges Maß außerhalb des Teilkreises. Weiterhin sind nach dem Stand der Technik die Flankenradien gleich der Zahnriemenfußbreite oder kleiner.

Bei den Anwendern von Zahnriementrieben, insbesondere bei den Herstellern von PKW-4-Takt-Motoren mit obenliegenden Nockenwellen, wird infolge des Strebens nach Massenreduzierung eine höhere Leistungsdichte von Zahnriementrieben gewünscht. Dem konnte bislang nur mit Einsatz teurerer Rohstoffe für den Zahnriemen entsprochen werden. - Aufgabe der Erfindung ist es, die Leistungsdichte von Zahnriementrieben ohne Erhöhung der Rohstoffkosten der Zahnriemen und ohne Erhöhung des Laufgeräusches zu vergrößern.

Die Aufgabe wird erfindungsgemäß dadurch gelöst, daß die Krümmungsradien der Radflanken in diesem Radflankenbereich 85 % bis 95 % der Teilung T des Rades betragen.

Hinter dieser Lösung steckt zunächst die Erkenntnis, daß eine weitere Erhöhung der Leistungsdichte von Zahnriementrieben nur möglich ist, wenn die Riemen einen höheren Traganteil an den radial inneren Flankenbereichen übernehmen, während in der Nähe der Riemenzahnfüße eine weitere Belastungserhöhung wegen Werkstoffversagens (Fußrisse) nicht mehr möglich ist. Eine solche Umverteilung der Traganteile wird dadurch erreicht, daß im Bereich des Riemenzahnfußes der Riemenzahn in Umfangsrichtung geringfügig schmaler ist als die zur Radlücke konjugierte Form, wobei dieses Mindermaß nach radial innnen hin, also zur Flankenmitte hin, bis auf Null abgebaut wird. Der Zahnfuß ist also "freigeschnitten".

Dieser der Lastumverteilung dienende Freischnitt des Riemenzahnfußes ist verwirklicht durch Verlagern des Radflankenkrümmungsmittelpunktes weg vom Riemenmomentanpol weiter nach radial außen bis über den Teilkreis hinaus. Diese Verlagerung ermöglicht die erfindungsgemäß vergrößerten Flankenradien. Erfindungsgemäße Zahnradflanken sind weniger gekrümmt als bislang bekannt und die Zahnflankensteilheit ändert sich weniger über der Zahnhöhe. Die Radflankenradien sollen größer sein als die Radzahnlückenweite (zu messen beim Übergang des Flankenradius in den Kopfradius) bzw. die Riemenzahnfußbreite.

Um solche Definitionsfrager zu umgehen, wo eine Zahnfußrundung aufhört und eine Zahnflanke beginnt und, wo eine Zahnflanke aufhört und eine Zahnkopfrundung beginnt, ist der (Mindest-)Bereich der Flanken, deren Krümmungspole sich erfindungsgemäß außerhalb des Teilkreises befinden sollen, eingegrenzt auf den radialen Bereich - ausgehend vom Kopfkreis - von 12 % bis 28 % des Teilungsmaßes T.

Für diesen Flankenbereich sollen gemäß den bisherigen Versuchsergebnissen die Krümmungsmittelpunkte um 9 % bis 14 % des Teilungsmaßes (T) radial außerhalb des Teilkreises liegen. Bei noch weiterer Verlagerung nach radial außen verschlechtert sich die Einlaufkinematik und damit der Abrieb, bei kleinerer Verlagerung nach radial außen ist die Tragfähigkeitserhöhung nur unzureichend. Für den wichtigsten Anwendungsfall, den Nockenwellenantrieb, liegt die optimale Verlagerung des Krümmungsmittelpunktes nach radial außen zwischen 11 % und 12 % der Teilung.

Eine Variation des Krümmungsradius innerhalb der Zahnflanke selbst führt gemäß den Versuchsergebnissen zu keiner signifikanten Verbesserung des Einlaufverhaltens. Unter weiterer Berücksichtigung der vereinfachten Fertigung und Fertigungskontrolle empfiehlt sich eine Kombination der erfindungsgemäßen Merkmale mit dem an sich bekannten Merkmal, daß jede Radflanke 30 in dem Bereich 32, der sich von 12 % bis 28 % der Teilung T erstreckt, um einen einzigen Krümmungspol 31 gekrümmt ist.

Erfindungsgemäße Zahnräder eignen sich besonders zur Paarung mit solchen Zahnriemen, die gemäß der nachveröffentlichten deutschen Patentanmeldung P 40 09 070.1 ausgebildet sind. Demgemäß weisen die konvex gewölbten Zahnriemenflanken zumindest in dem radialen Bereich, der sich von 25 % bis 80 % der Zahnkopfhöhe erstreckt, eine solche Krümmung auf, daß sich alle Krümmungspole radial außerhalb der Teilungslinie befinden. Unter der Riemenzahnkopfhöhe wird dabei das Maß verstanden ausgehend von der Riemenfußlinie nach radial innen hin bis zur Kopflinie. Die Riemenfußlinie verläuft durch die radial äußersten Punkte der Innenseite des Riemens. Die Riemenkopflinie verläuft durch die radial innersten Punkte der Innenseite des Riemens. Die Bezeichnungsweise "radial innen" bzw. "radial außen" ist gewachsene Fachsprache und ist evident für die kreisrunde Riemengestalt, in der üblicherweise ein Zahnriemen auf einer Trommel hergestellt wird.

Zahnriementriebe mit mindestens einem erfindungsgemäßen Zahnrad und Riemen gemäß vorstehendem Absatz sind in Kombination mit dem Riemenmerkmal, daß sich die Krümmungsradien der Riemenflanke in dem Riemenflankenbereich, der sich von 25 % bis 80 % der Riemenzahnkopfhöhe erstreckt, zwischen 205 % und 235 % der Riemenzahnkopfbreite betragen, Gegenstand des Nebenanspruchs 4. Dabei wird unter dem Begriff Riemenzahnkopfbreite die Breite verstanden, die bei 80 % der von der Riemenfußlinie aus zu messenden Riemenzahnkopfhöhe sich ergibt. Diese - gegenüber dem Stand der Technik großen - Riemenflankenradien führen, insbesondere zusammen mit den bevorzugten großen Zahnradflankenradien, zu einer besonders günstigen Lastaufteilung über der Zahnhöhe. Letztgenanntes Riemenmerkmal entspricht der Riemenausbildung gemäß der älteren P 40 09 070.1 (DE-GM 9007384, veröffentlicht 27.06.1991); jedoch wird gemäß vorliegender Erfindung ein solcher Riemen nicht mit einer evolventenförmigen Radverzahnung sondern einer Radverzahnung gemäß vorliegendem Anspruch 1 kombiniert.

Aus Gründen der einfachen Herstellung und Herstellungsüberwachung sollten sich dabei die Radflanken um jeweils einen einzigen Pol krümmen. Die Pole sollten 9 % bis 14 %, vorzugsweise 11 % bis 12 % des Teilungsmaßes T radial außerhalb des Teilkreises liegen.

Vorzugsweise entspricht der für ein erfindungsgemäßes Zahnrad zu verwendende Riemen auch den Ansprüchen 2 und 3 der P 40 09 070.1; demgemäß beträgt der radiale Abstand zwischen der Riementeilungslinie und den Krümmungsmittelpunkten der Riemenflanken 8 % bis 20 % der Riementeilung und die Riemenflanken weisen einen einzigen Krümmungspol auf. Dabei liegt gemäß einer vorteilhaften Weiterbildung der Flankenkrümmungspol der Riemenflanke um 1,5 % bis 3 % weniger radial außerhalb der Riementeilungslinie als der Krümmungspol der Radflanke radial außerhalb des Teilkreises.

Die Erfindung wird nachfolgend anhand von zwei Figuren näher erläutert. Es zeigt

Fig. 1 ein erfindungsgemäßes Zahnrad für Zahnriementriebe und

Fig. 2 einen erfindungsgemäßen Zahnriementrieb mit einem Zahnrad gemäß Fig. 1 und einem Riemen gemäß P 40 09 070.1.

Insoweit in dieser Anmeldung analoge Gegenstände dargestellt sind wie in der älteren eigenen, nicht vorbekannten Anmeldung P 40 09 070.1 werden in dieser Anmeldung die gleichen Bezugszeichen wie in der älteren verwendet, um ein Zusammenlesen beider Anmeldungen zu erleichtern.

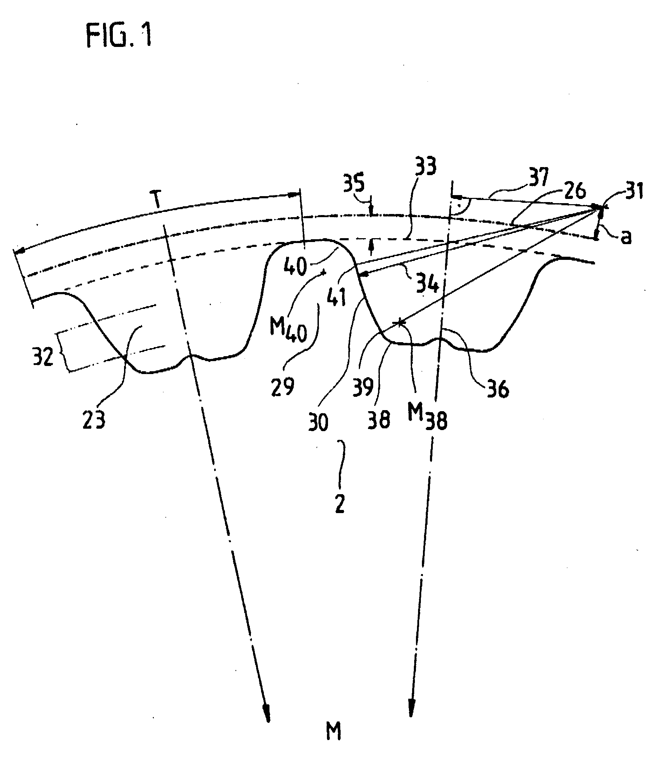

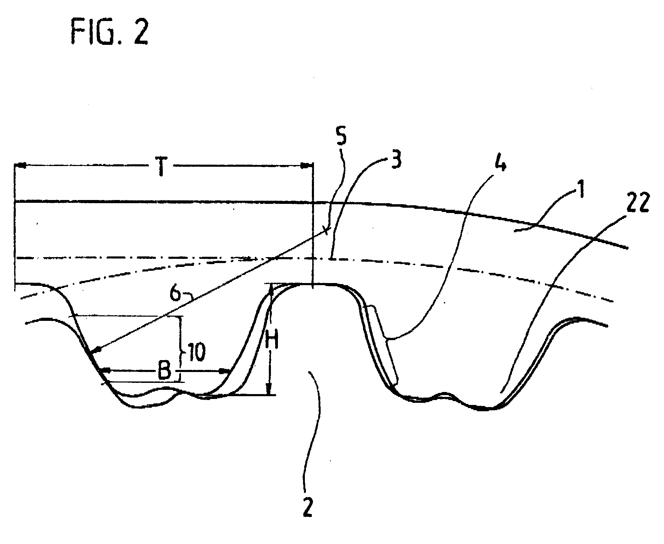

Fig. 1 zeigt ein erfindungsgemäßes Zahnrad 2 für Zahnriementriebe. Die Zahnlücken 23 zwischen den Zähnen 29 des Zahnrades 2 dienen der Aufnahme der Riemenzähne eines hier noch nicht (sondern erst in Fig. 2) dargestellten Zahnriemens 1. Die Flanken 30 der Radzähne 29 sind konkav gewölbt. Der Krümmungspol 31 der Zahnflanken für den zur Kraftübertragung wichtigen Bereich liegt radial außerhalb des strichpunktierten Teilungskreises 26. Als für die Kraftübertragung wichtiger Radflankenbereich ist für den Rahmen dieser Anmeldung der Bereich 32 definiert, der zwischen 12 % und 28 % der Radteilung T sich vom Kopfkreis 33 nach radial innen gezählt erstreckt.

Eventuell vorhandene Unterschiede zwischen Riementeilung und Radteilung sind bei funktionstüchtigen Riementrieben - im Verhältnis zur Teilung selbst - sehr klein; in den Figuren wird von der Identität beider Teilungen ausgegangen, wodurch sich die Verwendung ein und desselben Bezugszeichens "T" rechtfertigt. Der Teilkreis des Zahnrades soll im Bereich des Zahneingriffs mit der Teilungslinie des Riemens, der Biegeneutralen des Zugstranges, zusammenfallen.

Die Fig. 1 zeigt eine bevorzugte Ausführung eines erfindungsgemäßen Zahnrades 2, bei der die Krümmungsmittelpunkte 31 der für die Kraftübertragung wichtigsten Radflankenbereiche 32 um 11,3 % der Teilung T radial außerhalb des Teilkreises 26 liegen.

Dabei ist jede Radflanke 30 im besagten Bereich 32 im Querschnitt ein Sektor eines Kreises, also um einen einzigen Pol 31 gekrümmt. Der Krümmungsradius 34 dieser Flankenbereiche 32 beträgt 88,75 % der Teilung T und ist damit ungewöhnlich groß. Das gezeigte Zahnrad hat eine Zähnezahl (n) von 23.

Die Fig. 1 ist maßstabsgerecht gezeichnet; bei Zugrundelegung eines Maßstabes von 10:1 ergibt sich eine Teilung T von 8,000 mm auf dem strichpunktiert gezeichneten Teilkreis 26. Hieraus folgt ein Teilkreisumfang von 184 mm und ein Teilkreisdurchmesser von 58,569 mm. Der radiale Abstand 35 zwischen dem Radteilkreis 26 und dem Radkopfkreis 33 beträgt 0,686 mm; der Durchmesser des gestrichelt gezeichneten Kopfkreises beträgt also 57,197 mm.

Die Zahnflanken 30 sind durch je einen einzigen Kreisbogen mit dem Radius (34) = 7,100 mm beschrieben. Der Krümmungsmittelpunkt 31 der Radflanken liegt auf der jeweils gegenüberliegenden Seite bezüglich der Zahnlückenmittellinie 36 im Abstand 37 hierzu von 4,236 mm und im (radialen) Abstand a von 0,904 mm (= 11,3 % T) vom Teilkreis 26.

An den beschriebenen Flankenkreis 30 schließt sich tangential nach radial innen hin ein Radfußbogen 38 an, dessen Krümmungsmittelpunkt $M_{38}$ 1,156 mm von der Zahnlückenmittellinie 36 entfernt ist und dessen Radius 0,600 mm beträgt. Hieraus ergibt sich, daß der Anschlußpunkt 39 auf einem Radius von 25,977 mm um den Radmittelpunkt M liegt; dies bedeutet einen Abstand zum Radkopfkreis 33 von 2,621 mm. Bezogen auf die Teilung T von 8 mm liegt also die radial innere Grenze des Flankenbogens 30 bei 32,8 %.

Zur anderen Seite der Radflankenbögen 30 schließt sich tangential je ein Radkopfbogen 40 an, dessen Krümmungsmittelpunkt $M_{40}$ 3,404 mm von der Zahnlückenmittellinie 36 entfernt ist und dessen Radius 0,900 mm beträgt. Hieraus ergibt sich, daß der Anschlußpunkt 41 auf einem Radius von 27,900 mm um den Radmittelpunkt M liegt; dies bedeutet einen Abstand zum Radkopfkreis 33 von 0,699 mm. Dies sind 8,7 % der Teilung.

Bei der bevorzugten Ausführung wird die Lehre, den Flankenkrümmungsmittelpunkt 31 radial außerhalb des Teilkreises zu legen, im Flankenbereich von 8,7 % T bis 32,8 % T eingehalten; der in Anspruch 1 genannte Bereich von 12 % T bis 28 % T ist also als Mindestbereich aufzufassen.

Die Fig. 2 zeigt die Paarung eines Zahnrades 2 nach Fig. 1 mit einem Zahnriemen 1 gemäß der nicht vorbekannten deutschen Patentanmeldung P 40 09 070.1. Der Zahnriemen 1 ist ohne die belastungsabhängigen Zahnverformungen dargestellt; dort wo die Zahnriemenkontur die Zahnradkontur überlappt - insbesondere an beiden Höckern der Zahnriemenköpfe 22 - stellt sich im Betrieb Pressung ein.

Der Krümmungsradius 6 der Riemenflanken 4 beträgt 7,100 mm, also 208 % der Riemenzahnkopfbreite B von 3,411 mm. Der Krümmungsmittelpunkt 5 der Riemenflanken 4 liegt 0,642 mm außerhalb der Teilungslinie 3, also um 8,02 % der Teilung T von 8,000 mm. Diese Angaben beziehen sich auf den Riemenflankenbereich 10, der sich zwischen 25 % und 80 % der Riemenzahnkopfhöhe H erstreckt, die in diesem Ausführungsbeispiel 3,030 mm beträgt.

Erfindungsgemäße Zahnräder ermöglichen unabhängig von einer Werkstoffsubstitution eine Erhöhung der Leistungsdichte um einige Prozent ohne Verschlechterung der sonstigen Eigenschaften, insbesondere der Laufruhe. Dies wird in Verbindung mit einer Verlagerung der Radflankenkrümmungsmittelpunkte nach radial außen durch neuartig große Krümmungsradien erreicht. Der Vorteil kommt besonders deutlich an solchen erfindungsgemäßen Zahnriementrieben zur Geltung, wo die Lehre analog auch für den Riemen angewendet ist, also auch die Krümmungsmittelpunkte der Riemenflanken nach radial außen verlagert und die Flankenkrümmungsradien besonders groß sind.

Die aufgezeigte Lehre ist überraschend, denn eigentlich sollte mit den zugrundeliegenden Versuchsreihen die optimale Krümmungsradius-Variation über der Zahnkopfhöhe ermittelt werden, nachdem durch die EP-A-0 049 962 eine solche Krümmungsradius-Variation propagiert wurde.

Bezugszeichenliste

| | |
|---|---|
| 1 | Zahnriemen |
| 2 | Zahnrad |
| 3 | Teilungslinie des Riemens 1 |
| 4 | Riemenflanke |
| 5 | Krümmungsmittelpunkt der Riemenflanke 4 |
| 6 | Krümmungsradius der Riemenflanke 4 |
| 10 | Riemenflankenbereich |
| 22 | Zahnkopf des Zahnriemens 1 |
| 23 | Zahnlücken des Zahnrades 2 |
| 26 | Teilungskreis des Zahnrades 2 |
| 29 | Zähne des Zahnrades 2 |
| 30 | Flanken der Radzähne 29 |
| 31 | Krümmungsmittelpunkte der Radflanken 30 |
| 32 | Radflankenbereich von 12 % bis 28 % der Radteilung T |
| 33 | Radkopfkreis |
| 34 | Krümmungsradien der Radflanken 30 |
| 35 | Radialer Abstand zwischen Radteilkreis 26 und Radkopfkreis 33 |
| 36 | Mittellinie der Radzahnlücken 23 |
| 37 | Abstand zwischen Zahnlückenmittellinie 36 und Krümmungsmittelpunkt 31 |
| 38 | Radfußbogen |
| 39 | Anschlußpunkt zwischen Radfußbogen 38 und Flankenbogen 30 |
| 40 | Radkopfbogen |
| 41 | Anschlußpunkt zwischen Radkopfbogen 40 und Flankenbogen 30 |
| a | Radialer Abstand vom Flankenkrümmungsmittelpunkt 31 zum Teilkreis 26 |
| B | Riemenzahnkopfbreite |
| H | Riemenzahnkopfhöhe |
| M | Radmittelpunkt |
| $M_{38}$ | Krümmungsmittelpunkt des Radfußbogens 38 |

$M_{40}$  Krümmungsmittelpunkt des Radkopfbogens 40

T  Teilung der Radflanken 30 des Zahnrades 2 und des Zahnriemens 1

**Patentansprüche**

1. Zahnrad (2) einer beliebigen Zähnezahl (n) und Teilung (T) für einen Zahnriementrieb mit einer Vielzahl von Zähnen (29) und jeweils zwischen zwei Zähnen (29) befindlichen Zahnlücken (23), wobei die Flanken (30) der Zähne (29) zumindest in dem Radflankenbereich (32), der sich von 12 % bis 28 % der Teilung (T) vom Kopfkreis (33) aus erstreckt, in der Weise konkav gewölbt sind, daß sich alle Krümmungspole (31) radial außerhalb des Teilkreises (26) befinden, **dadurch gekennzeichnet,** daß die Krümmungsradien (34) der Radflanken (30) in diesem Radflankenbereich (32) 85 % bis 95 % der Teilung (T) des Rades (2) betragen.

2. Zahnrad (2) nach Anspruch 1, dadurch gekennzeichnet, daß alle Krümmungspole (31) des Radflankenbereiches (32), der sich von 12 % bis 28 % der Teilung (T) vom Kopfkreis aus erstreckt, um einen Betrag zwischen 9 % und 14 % des Teilungsmaßes (T) radial außerhalb des Teilkreises (26) liegen.

3. Zahnrad (2) nach einem der vorangehenden Ansprüche, dadurch gekennzeichnet, daß in an sich bekannter Weise jede Radflanke (30) in dem Bereich, der sich von 12 % bis 28 % der Teilung (T) vom Kopfkreis aus erstreckt, um einen einzigen Krümmungspol (31) gekrümmt ist.

4. Zahnriementrieb bestehend aus mindestens einem Zahnrad (2) nach Anspruch 1 in Kombination mit einem Zahnriemen (1) mit Zähnen der Zahnkopfhöhe (H), wobei der Riemen (1) im Profilquerschnitt in der Weise konvex gewölbte Flanken (4) aufweist, daß sich in den Umschlingungssektoren zumindest für den radialen Bereich (10) derselben (4), der sich von 25 % bis 80 % der Zahnkopfhöhe (H) erstreckt, alle Krümmungspole (5) radial außerhalb des Teilungslinie (3) befinden, **dadurch gekennzeichnet,** daß innerhalb dieses Riemenflankenbereiches (10) die Krümmungsradien (6) der Riemenflanken (4) zwischen 205 % und 235 % der Riemenzahnkopfbreite (B) betragen, wobei unter Riemenzahnkopfbreite (B) die Breite zu verstehen ist, die sich bei 80 % der von der Riemenfußlinie aus zu messenden Riemenzahnkopfhöhe ergibt (siehe auch Figur 2).

5. Zahnriementrieb nach Anspruch 4, dadurch gekennzeichnet, daß mindestens ein Zahnrad (2) nach der Kombination aller Ansprüche 1 bis 3 ausgebildet ist.

6. Zahnriementrieb nach einem der vorangehenden Ansprüche, dadurch gekennzeichnet, daß in dem Riemenflankenbereich (10), der sich von 25 % bis 80 % der Zahnkopfhöhe (H) erstreckt, sich in an sich bekannter Weise jede Riemenflanke (4) um einen einzigen Krümmungspol (5) krümmt, welcher (5) sich um einen Betrag zwischen 8 % und 20 % des Teilungsmaßes (T) radial außerhalb der Teilungslinie (3) befindet.

7. Zahnriementrieb nach Anspruch 6, dadurch gekennzeichnet, daß der Flankenkrümmungspol (5) der Riemenflanke (4) um 1,5 % bis 3 % weniger radial außerhalb der Riemenzahnteilungslinie (3) liegt als der Krümmungspol (31) der Radflanke (30) radial außerhalb des Teilkreises (26).

**Claims**

1. Toothed wheel (2) having any number (n) of teeth and any pitch (T) for a toothed-belt drive with a plurality of teeth (29) and with tooth spaces (23) inbetween each pair of teeth (29) where the flanks (30) of the teeth (29) are rounded concavely, at least in the wheel flank zone (32) which extends from 12% to 28% of the pitch (T) from the tip circle (33), in such a way that all poles of curvature (31) lie radially outside the reference pitch circle (26), **characterized in that** the radii of curvature (34) of the wheel flanks (30) in the said wheel flank zone (32) amount to 85% to 95% of the pitch (T) of the wheel (2).

2. Toothed wheel (2) in accordance with claim 1, characterized in that all poles of curvature (31) of the wheel flank zone (32) extending from 12% to 28% of the pitch (T) from the tip circle lie radially outside the reference pitch circle (26) by an amount of between 9% and 14% of the pitch (T).

3. Toothed wheel (2) in accordance with one of the preceding claims, characterized in that each wheel flank (30) in the zone extending from 12% to 28% of the pitch (T) from the tip circle is curved, in a manner known per se, around one single pole of curvature (31).

4. Toothed-belt drive consisting of at least one toothed wheel (2) in accordance with claim 1 in combination with a toothed belt (1) having teeth of the addendum (H) where the flanks (4) of the belt (1) are curved in such a way that all poles of curvature (5) in the sectors of belt contact, at least for the radial zone (10) of the flanks (4) which extends from 25% to 80% of the addendum (H), lie radially outside the reference pitch line (3), **characterized in that** the radii of curvature (6) of the belt flanks (4) within this belt flank zone (10) amount to between 205% and 235% of the width of the belt tooth tip (B) where width (B) of the belt tooth tip is the width at 80% of the belt addendum measured from the belt root line (see also Figure 2).

5. Toothed-belt drive in accordance with claim 4, characterized in that at least one toothed wheel (2) is formed in accordance with the combination of all claims 1 to 3.

6. Toothed-belt drive in accordance with one of the preceding claims, characterized in that each belt flank (4) curves, in a manner known per se, around one single pole of curvature (5) in the belt flank zone (10) which extends from 25% to 80% of the addendum (H), said pole of curvature (5) lying radially outside the reference pitch line (3) by an amount of between 8% and 20% of the pitch (T).

7. Toothed-belt drive in accordance with claim 6, characterized in that the pole of flank curvature (5) of the belt flank (4) lies 1.5% to 3% less radially outside the belt tooth reference pitch line (3) than the amount by which the pole of curvature (31) of the wheel flank (30) lies radially outside the reference pitch circle (26).

**Revendications**

1. Roue dentée (2) avec un nombre (n) quelconque de dents et un pas (T), destinée à une transmission par courroie dentée avec une multitude de dents (29) et des entredents (23) se trouvant respectivement entre deux dents (29), les flancs (30) des dents (29) étant, au moins dans la zone des flancs des dents (32), qui s'étend de 12 % à 28 % du pas (T), à partir du cercle de tête (33), tellement concaves que tous les pôles de courbure (31) se trouvent radialement à l'extérieur du cercle primitif de référence (26), **caractérisée en ce que** les rayons de courbure (34) des flancs des dents (30) correspondent dans cette zone des flancs de la roue (32) à 85 % jusqu'à 95 % du pas (T) de la roue (2).

2. Roue dentée (2) conformément à la revendication 1, caractérisée en ce que tous les pôles de courbure (31) de la zone des flancs de la roue (32), qui s'étend de 12 % à 28 % du pas (T), à partir du cercle de tête, se trouvent radialement à l'extérieur du cercle primitif de référence (26) de 9 % à 14 % du pas (T).

3. Roue dentée (2) conformément à l'une des revendications précédentes, caractérisée en ce que, d'une façon connue en soi, chaque flanc de la roue (30) est incurvé autour d'un seul pôle de courbure (31) dans la zone qui s'étend de 12 % à 28 % du pas (T), à partir du cercle de tête.

4. Transmission par courroie dentée composée au moins d'une roue dentée (2) conformément à la revendication 1 associée à une courroie dentée (1) avec des dents de hauteur de saillie (H), la courroie (1) présentant, dans la section de son profil, des flancs tellement convexes (4) que dans les secteurs de contact, tout du moins dans la zone radiale (10) de ces flancs (4) qui s'étend de 25 % à 80 % de la hauteur de saillie des dents (H), tous les pôles de courbure (5) se trouvent en dehors de la ligne primitive de référence (3), **caractérisée en ce que,** dans cette zone des flancs de la courroie (10), les rayons de courbure (6) des flancs de la courroie (4) sont de 205 % à 235 % de la largeur de salle des dents de la courroie (B), étant entendu que la largeur de salle des dents de la courroie (B) est la largeur obtenue sur 80 % de la hauteur de salle des dents de la courroie devant être mesurée à partir de la ligne de pied de la courroie (voir aussi la figure 2).

5. Transmission par courroie dentée conformément à la revendication 4, caractérisée en ce que au moins une roue dentée (2) est conçue conformément à la combinaison de toutes les revendications 1 à 3.

6. Transmission par courroie dentée conformément à l'une des revendications précédentes, caractérisée en ce que dans la zone des flancs de la courroie (10) qui s'étend de 25 % à 80 % de la hauteur de saillie des dents (H), d'une façon connue en soi, chaque flanc (4) est incurvé autour d'un seul pôle de courbure (5) qui (5) se trouve radialement à l'extérieur de la ligne primitive de référence (3) de 8 % à 20 % du pas (T).

7. Transmission par courroie dentée conformément à la revendication 6, caractérisée en ce que le pôle de courbure des flancs (5) du flanc de la courroie (4) se trouve de 1,5 % à 3 % moins radialement en dehors de la ligne primitive de référence des dents de la courroie (3) que le pôle de courbure (31) du flanc de la roue (30) se trouve radialement en dehors du cercle de tête (26).

FIG. 1

FIG. 2